# EUROPÄISCHE PATENTSCHRIFT

(11) **EP 0 717 205 B1**
(45) Veröffentlichungstag und Bekanntmachung des Hinweises auf die Patenterteilung: **12.01.2000**
(21) Anmeldenummer: 95810631.2
(22) Anmeldetag: 06.10.1995
(51) Int. Cl.: F16B 37/06, F16B 37/04, F16B 5/04, F16L 3/14

(54) **Befestigungselement**
Fastening device
Dispositif de fixation

(30) Priorität: 16.12.1994 DE 4444908
(43) Veröffentlichungstag der Anmeldung: 19.06.1996
(73) Patentinhaber: HILTI Aktiengesellschaft, 9494 Schaan (LI)
(72) Erfinder: Höfle, Siegfried, A-6840 Götzis (AT)
(74) Vertreter: Wildi, Roland

(56) Entgegenhaltungen:
- DE-A- 3 905 688
- US-A- 2 302 501
- US-A- 2 771 262
- US-A- 3 960 047

## Beschreibung

Die Erfindung betrifft ein Befestigungselement mit Blechbiegeteil und Anschlusselement, wobei das Blechbiegeteil für das Anschlusselement eine Durchgangsbohrung und das Anschlusselement eine sich am Blechbiegeteil abstützende erste Auflagefläche sowie einen die Durchgangsbohrung durchsetzenden, mit einer der ersten Auflagefläche gegenüberliegenden zweiten Auflagefläche aufweist.

Aus der DE-AS-1 262 699 ist zur Befestigung von Rohrschellen an Bauteilen ein Befestigungselement mit Anschlusselement und Blechbiegeteil bekannt. Als Anschlusselement dient eine mit dem Bauteil in Verbindung bringbare Schraube mit zwei Gewindebereichen, wobei ein erster Gewindebereich mit dem Bauteil und ein zweiter Gewindebereich mit dem Blechbiegeteil in Verbindung bringbar ist. Der Verbindung des Anschlusselementes mit dem Blechbiegeteil dient eine Durchgangsbohrung im Blechbiegeteil und ein am Umfangsbereich der Durchgangsbohrung angeformter Kragen mit einem Innengewinde. Mit diesem bekannten Befestigungselement ist eine sichere Aufhängung von Rohrschellen mit schweren Rohren nicht möglich. Hohe Zugkräfte führen zu einem radialen Ausdehnen des Kragens, so dass die Gewindeverbindung zwischen dem Anschlusselement und dem Blechbiegeteil zerstört wird.

Aus der DE-PS 16 50 945 ist eine Abhängevorrichtung zur Befestigung von Gegenständen an Bauteilen bekannt, wobei ein Befestigungselement mit Blechbiegeteil und Anschlusselement der Fixierung von zwei gegeneinander stufenlos verstellbaren Profilstäben dient. Das unlösbar mit dem Blechbiegeteil verbundene Anschlusselement weist ein Angriffsmittel in Form eines Innengewindes und einen zylindrischen Ansatz auf, der eine Durchgangsbohrung des Blechbiegeteiles durchsetzt und sich an einer ersten Auflagefläche des Anschlusselementes, auf der Innenseite des Blechbiegeteiles, abstützt. Der Endbereich des Ansatzes ist durch eine Materialumformung radial aufgeweitet und bildet eine der ersten Auflagefläche gegenüberliegende zweite Auflagefläche, die sich auf der Aussenseite des Blechbiegeteiles abstützt. Hohe Zugkräfte, die an der ersten oder zweiten Auflagefläche des Anschlusselementes angreifen, verursachen eine Aufweitung der Durchgangsbohrung, so dass das Anschlusselement aus dem Blechbiegeteil ausreissen kann.

Aus der DE-A-3 905 688 ist ein Verbindungselement bekannt, das der kraftschlüssigen Verbindung mehrerer Materiallagen dient. Eine der Materiallagen wird von einer Grundplatte mit einer Durchgangsbohrung gebildet, die von einem umlaufenden, von der Grundplatte gebildeten Kragen umgeben ist, der die Ebene der Grundplatte auf einer Seite überragt. Die weiteren Materiallagen sind ebenfalls mit einer Durchgangsbohrung versehen, deren Durchmesser kleiner ist als der Durchmesser der Durchgangsbohrung in der Grundplatte. Das Verbindungselement weist eine der Grundplatte zugewandte Auflagefläche auf, die mit einer den Kragen der Grundplatte aufnehmenden, ringförmigen Vertiefung versehen ist, wobei die Tiefe der ringförmigen Vertiefung wenigstens der Höhe des Kragens entspricht. Von der Auflagefläche des Kragens ragt ein Ansatz ab, der die kleineren Durchgangsbohrungen der weiteren Materiallagen durchsetzt und mit einem Nietkopf die näher beim freien Ende des Ansatzes liegende Materiallage hintergreift.

Der Erfindung liegt die Aufgabe zugrunde, ein Blechbiegeteil mit Anschlusselement zu schaffen, bei dem auch beim Auftreten hoher Zugkräfte eine sichere Verbindung zwischen dem Anschlusselement und dem Blechbiegeteil gewährleistet ist.

Erfindungsgemäss wird die Aufgabe dadurch gelöst, dass die Durchgangsbohrung von einem umlaufenden, vom Blechbiegeteil gebildeten Kragen umgeben ist, der die Ebene des Blechbiegeteiles auf einer Seite überragt, und eine der Auflageflächen eine den Kragen aufnehmende ringförmige Vertiefung aufweist, wobei die Tiefe der ringförmigen Vertiefung wenigstens der Höhe des Kragens entspricht und dass die dem Kragen gegenüberliegende Seite des Blechbiegeteiles mit der zweiten Auflagefläche des Nietkopfes zusammenwirkt, der Teil des Ansatzes ist und dessen Aussendurchmesser grösser ist als der Durchmesser der Durchgangsbohrung des Blechbiegeteiles.

Aufgrund der erfindungsgemässen Ausgestaltung des Befestigungselementes können hohe Zugkräfte aufgenommen werden. Die hauptsächlich durch die Zugkräfte auftretenden Quer- und Biegekräfte im Bereich der Durchgangsbohrung werden von dem im Umfangsbereich der Durchgangsbohrung angeordneten Kragen aufgenommen. Dieser, in eine ringförmige Vertiefung einer der beiden Auflageflächen ragende Kragen, verleiht dem Blechbiegeteil im Bereich der Durchgangsbohrung eine grössere Stabilität. Ein radiales Aufweiten der Durchgangsbohrung wird durch die formschlüssige Verbindung des Kragens mit der ringförmigen Vertiefung verhindert.

Aus herstellungstechnischen Gründen ist zweckmässigerweise die den Kragen aufnehmende, ringförmige Vertiefung an der ersten Auflagefläche angeordnet. Die an dem Anschlusselement angeordnete ringförmige Vertiefung kann somit hergestellt werden, wenn das Anschlusselement mit dem Blechbiegeteil noch nicht in Verbindung steht. Das Anschlusselement mit einer insbesonderen zylindrischen Aussenkontur lässt zudem eine gute Einspannung in einer Bearbeitungsmaschine zu.

Aus wirtschaftlichen und aus herstellungstechnischen Gründen ist zweckmässigerweise der Ansatz einstückig am Anschlusselement ausgebildet. Die zweite Auflagefläche ist gebildet von einem Teil des Ansatzes, der mit Hilfe eines - im stirnseitigen Bereich des Ansatzes ansetzenden Nietwerkzeuges - in radialer Richtung verformt wird.

Aus handhabungs- und montagetechnischen Gründen ist vorzugsweise der Ansatz lösbar am Anschlusselement angeordnet. Das gesamte Anschlusselement besteht somit aus zwei Teilen, die einfach und schnell mit dem Blechbiegeteil in Verbindung bringbar sind.

Eine lösbare Verbindung des Anschlusselementes mit dem Blechbiegeteil wird erreicht, wenn vorteilhafterweise der Ansatz ein mit einem Innengewinde des Anschlusselementes zusammenwirkendes Aussengewinde aufweist.

Die Festlegung des Befestigungselementes an einem Bauteil erfolgt über ein Angriffsmittel des Anschlusselementes, das vorteilhafterweise von einem Anschlussgewinde gebildet ist. Dieses Anschlussgewinde dient beispielsweise der Verbindung mit einer fest mit einem Bauteil in Verbindung stehenden Gewindestange.

Damit das Befestigungselement mit unterschiedlich grossen Gewinden aufweisenden Gewindestangen in Verbindung gebracht werden kann, ist das Anschlussgewinde vorzugsweise aus wenigstens zwei Innengewinden mit unterschiedlichen Durchmessern gebildet. Die Innengewinde sind koaxial zueinander und hintereinander angeordnet.

Die Erfindlung wird anhand von Zeichnungen, die mehrere Ausführungsbeispiele wiedergeben, näher erläutert. Es zeigen:
- Fig. 1, 2, 3: ein erfindungsgemässes Befestigungselement mit Blechbiegeteil und Anschlusselement;
- Fig. 4: ein weiteres Befestigungselement mit einem zweiteiligen Anschlusselement;
- Fig. 5: ein weiteres Befestigungselement, das zwei Blechbiegeteile miteinander verbindet;
- Fig. 6: ein weiteres Befestigungselement mit Anschlusselement und Blechbiegeteil in Form einer Rohrschelle.

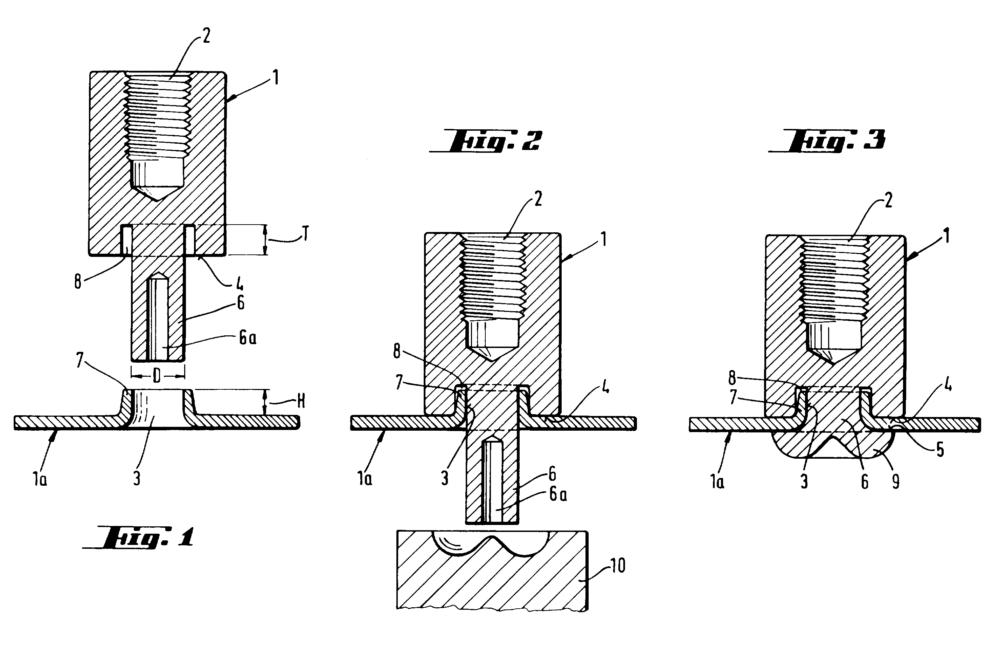

In den Figuren 1, 2, 3 sind drei Arbeitsstufen dargestellt, die die Herstellung einer unlösbaren Verbindung eines Anschlusselements 1 mit einem Blechbiegeteil 1a zeigen.

Das in Fig. 1 dargestellte Befestigungselement setzt sich aus zwei Teilen, einem Anschlusselement 1 und einem Blechbiegeteil 1a, zusammen. Das Blechbiegeteil 1a besitzt eine Durchgangsbohrung 3, die von einem umlaufenden, vom Blechbiegeteil 1a gebildeten Kragen 7 umgeben ist, der die Ebene des Blechbiegeteiles 1a auf jener Seite überragt, die dem Anschlusselement 1 zugewandt ist. Das Anschlusselement 1 besitzt einen Ansatz 6 mit einem Durchmesser D, dessen Querschnitt auf die Form des Querschnittes der Durchgangsbohrung 3 des Blechbiegeteiles 1a abgestimmt ist. Der Querschnitt des Ansatzes 6 ist kleiner als der restliche Querschnitt des Anschlusselementes 1. Im stirnseitigen Bereich besitzt der Ansatz 6 eine Bohrung 6a, die dem Ansatz 6 ein besseres Aufspreizverhalten in radialer Richtung verleiht.

Eine erste, dem Blechbiegeteil 1a zugewandte Auflagefläche 4 des Anschlusselementes 1 verläuft senkrecht zur Längserstreckung des Anschlusselementes 1 und besitzt eine ringförmige Vertiefung, 8 die der Aufnahme des Kragens 7 des Blechbiegeteiles 1a dient. Die Tiefe T dieser ringförmigen Vertiefung 8 ist wenigstens gleich gross wie eine Höhe H des Kragens 7. Jener Betrag um den der Kragen 7 von der Oberfläche des Blechbiegeteiles 1a abragt, wird als Höhe H bezeichnet. Die ringförmige Vertiefung 8 an dem Anschlusselement 1 schliesst sich in radialer Richtung an den Ansatz 6 an.

Der dem Ansatz 6 gegenüberliegende stirnseitige Endbereich des Anschlusselementes 1 weist ein Angriffsmittel 2 in Form eines Innengewindes auf. Dieses Innengewinde dient der Aufnahme einer nicht dargestellten Gewindestange, die mit einem ebenfalls nicht dargestellten Bauteil fest verbunden ist.

In Fig. 2 steht das Anschlusselement 1 in Steckverbindung mit dem Blechbiegeteil 1a. Der Ansatz 6 ragt durch die Durchgangsbohrung 3 des Blechbiegeteiles 1a. Gegenüber vom stirnseitigen Bereich des Ansatzes 6 ist ein Nietwerkzeug 10 angeordnet, das an einer dem Ansatz 6 zugewandten Seite eine Profilierung aufweist.

Ein Teil des Ansatzes 6 des in Fig. 3 dargestellten Anschlusselementes 1 ist von dem Nietwerkzeug 10 zu einem Nietkopf 9 umgeformt, wobei der Nietkopf 9 das Blechbiegeteil 1a an jener Seite hintergreift, die der ersten Auflagefläche 4 abgewandt ist. Der dem Blechbiegeteil 1a zugewandte Bereich des Nietkopfes 9 bildet die zweite Auflagefläche 5.

Das in Fig. 4 dargestellte Befestigungselement besitzt ein Anschlusselement 11, das mit einem, eine Durchgangsbohrung 13 eines Blechbiegeteiles 11a durchsetzenden Ansatz 16 lösbar verbunden ist. Eine von dem Anschlusselement 11 gebildete erste Auflagefläche 14 und eine von dem Ansatz 16 gebildete zweite Auflagefläche 15 liegen an jeweils einer Seite des Blechbiegeteiles 11a an.

Die erste Auflagefläche 14 weist eine ringförmige Vertiefung 18 auf, die der Aufnahme eines Kragens 17 dient. Der Kragen 17 ist Teil des Blechbiegeteiles 11a und umgibt die Durchgangsbohrung 13. An die ringförmige Vertiefung 18 schliesst sich ein der Aufnahme eines Aussengewindes 20 des Ansatzes 16 dienendes Innengewinde 20a an.

Die zweite Auflagefläche 15 wird gebildet von einem erweiterten Bereich des Ansatzes 16, dessen Aussenkontur den Durchmesser der Durchgangsbohrung 13 radial überragt.

Ein der Festlegung des Befestigungselementes an dem Bauteil dienendes Angriffsmittel 12 in Form eines Innengewindes besitzt das Anschlusselement 11 in einem stirnseitigen, der ersten Auflagefläche 14 gegenüberliegenden Bereich. Das Innengewinde ist koaxial zu einem kleineren Innengewinde 20a angeordnet.

Mit Hilfe der Werkzeuge können das Blechbiegeteil 11a und das Anschlusselement 11 gegeneinander verdreht werden. Dem Angriff von Werkzeugen an dem Blechbiegeteil 11a und dem Anschlusselement 11 dienen nicht dargestellte Flächen.

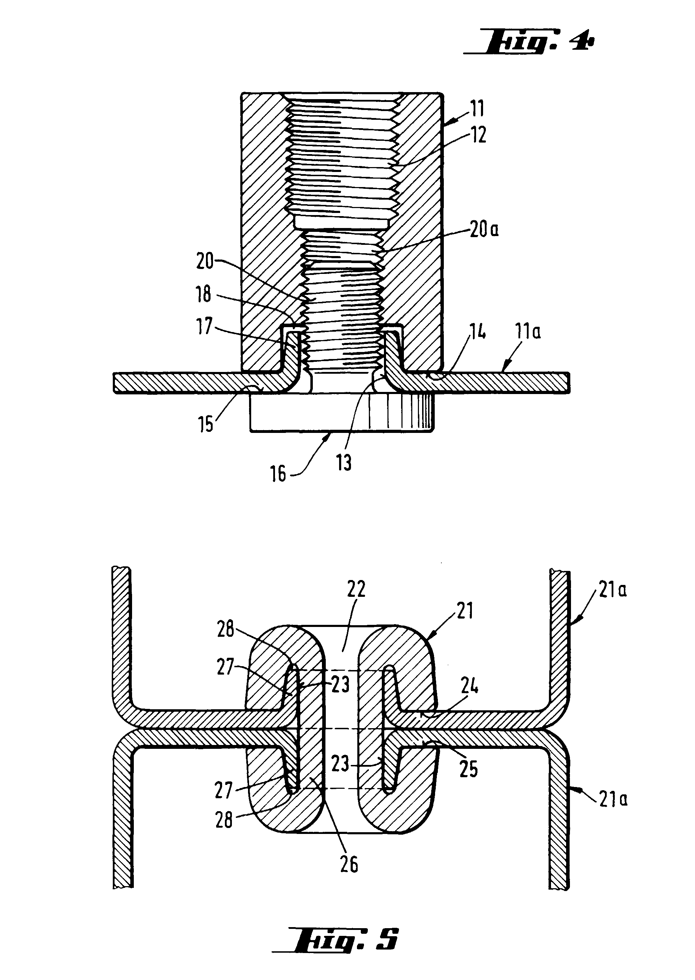

Der Verbindung zweier Blechbiegeteile 21a in Form von Profilschienen dient das in Fig. 5 dargestellte einstückige Anschlusselement 21. Jede Profilschiene besitzt wenigstens eine Durchgangsbohrung 23, die von einem umlaufenden, von der Profilschiene gebildeten Kragen 27 umgeben ist. Die Kragen 27 sind so ausgebildet, dass sie jeweils in das Innere der Profilschienen ragen. Im Querschnitt betrachtet, ist das Anschlusselement 21 symmetrisch ausgebildet. Sowohl eine erste Auflagefäche 24 als auch eine zweite Auflagefläche 25 besitzen eine ringförmige Vertiefung 28, die der Aufnahme der Kragen 27 beider Profilschienen dienen. Jene Stirnseite, welche die zweite Auflagefläche 25 aufweist, ist durch einen Umformvorgang eines Bereiches eines Ansatzes 26 in die dargestellte Form bringbar.

Als Angriffsmittel 22 des Befestigungselementes dient eine das Anschlusselement 21 in Längsrichtung durchsetzende, zentrale Bohrung, die der Aufnahme eines an einem nicht dargestellten Bauteil befestigten Befestigungselementes dient.

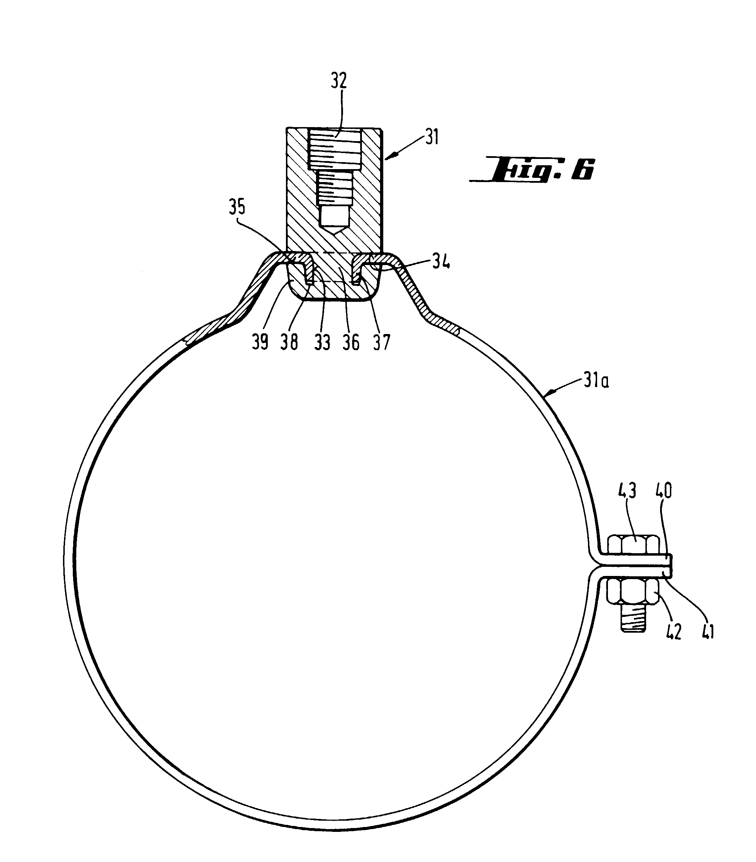

In Fig. 6 ist ein Befestigungselement mit einem Anschlusselement 31 und einem Blechbiegeteil 31a in Form einer Rohrschelle dargestellt. Die Rohrschelle besitzt zwei parallel zueinander verlaufende Flansche 40, 41 die von einer Befestigungsschraube 43 durchsetzt sind. Mit der Befestigungsschraube wirkt eine Befestigungsmutter 42 zusammen.

Der Befestigung der Rohrschelle an einem nicht dargestellten Bauteil dient das Anschlusselement 31, das mit der Rohrschelle unlösbar verbunden ist. Durch eine senkrecht zum lichten Querschnitt verlaufende Durchgangsbohrung 33 ragt ein Ansatz 36 des Anschlusselementes 31, wobei ein Bereich des Ansatzes 36 zu einem Nietkopf 39 umgeformt ist. Dieser Nietkopf 39 bildet eine zweite Auflagefläche 35, die an der Innenseite der Rohrschelle, im Bereich der Durchgangsbohrung 33 anliegt.

Die Durchgangsbohrung 33 ist von einem umlaufenden, von der Rohrschelle gebildeteten, in das Innere der Rohrschelle ragenden Kagen 37 umgeben. Die zweite Auflagefläche 35 besitzt eine ringförmige Vertiefung 38, die der Aufnahme des Kragens 37 dient. Der Bereich der Rohrschelle im Bereich der Durchgangsbohrung 33 ist radial nach aussen erweitert ausgebildet, so dass sowohl der Kragen 37 als auch der Nietkopf 39 nicht in den lichten Querschnitt der Rohrschelle ragen.

Das Anschlusselement 31 besitzt eine erste Auflagefläche 34, die auf der Aussenseite der Rohrschelle im Bereich der Durchgangsbohrung 33 anliegt. An einem, dem Nietkopf gegenüberliegenden, stirnseitigen Bereich besitzt das Anschlusselement 31 ein Angriffsmittel 32 in Form von zwei koaxial, hintereinander angeordneten Innengewinden mit unterschiedlichen Durchmessern. Diese Innengewinde dienen der Aufnahme einer fest mit dem nicht dargestellten Bauteil in Verbindung stehenden Gewindestange.

## Patentansprüche

1. Befestigungselement mit Blechbiegeteil (1a, 11a, 21a, 31a) und einem der Festlegung des Befestigungselementes an einem Bauteil dienenden Anschlusselement (1, 11, 21, 31) wobei das Blechbiegeteil (1a, 11a, 21a, 31a) für das Anschlusselement (1, 11, 21, 31) eine Durchgangsbohrung (3, 13, 23, 33) und das Anschlusselement (1, 11, 21, 31) eine sich am Blechbiegeteil (1a, 11a, 21a, 31a) abstützende erste Auflagefläche (4, 14, 24, 34) sowie einen die Durchgangsbohrung (3, 13, 23, 33) durchsetzenden Ansatz (6, 16, 26, 36) mit einer der ersten Auflagfläche (4, 14, 24, 34) gegenüberliegenden zweiten Auflagefläche (5, 15, 25, 35) aufweist, wobei die Durchgangsbohrung (3, 13, 23, 33) von einem umlaufenden, vom Blechbiegeteil (1a, 11a, 21a, 31a) gebildeten Kragen (7, 17, 27, 37) umgeben ist, der die Ebene des Blechbiegeteiles (1a, 22a, 21a, 31a) auf einer Seite überragt, eine der Auflageflächen (4, 5, 14, 15, 24, 25, 34, 35) eine den Kragen (7, 17, 27, 37) aufnehmende ringförmige Vertiefung (8, 18, 28, 38) aufweist, wobei die Tiefe (T) der ringförmigen Vertiefung (8, 18, 28, 38) wenigstens der Höhe (H) des Kragens (7, 17, 27, 37) entspricht, **dadurch gekennzeichnet**, dass die dem Kragen (7, 17, 27, 37) gegenüberliegende Seite des Blechbiegeteiles (1a, 11a, 21a, 31a) mit der zweiten Auflagefläche (4, 14, 24, 34) des Nietkopfes (9, 39) zusammenwirkt, der Teil des Ansatzes (6, 16, 26, 36) ist und dessen Aussendurchmesser grösser ist als der Durchmesser der Durchgangsbohrung (3, 13, 23, 33) des Blechbiegeteiles (1a, 11a, 21a, 31a).

2. Befestigungselement nach Anspruch 1, dadurch gekennzeichnet, dass die den Kragen (7, 17, 27) aufnehmende ringförmige Vertiefung (8, 18, 28) an der ersten Auflagefläche (4, 14, 24) angeordnet ist.

3. Befestigungselement nach Anspruch 1, dadurch gekennzeichnet, dass die den Kragen (27, 37) aufnehmende ringförmige Vertiefung (28, 38) an der zweiten Auflagefläche (24, 34) des Ansatzes (26, 36) angeordnet ist.

4. Befestigungselement nach einem der Ansprüche 1 bis 3, dadurch gekennzeichnet, dass der Ansatz (6, 26, 36) einstückig am Anschlusselement (1, 21, 31) ausgebildet ist.

5. Befestigungselement nach einem der Ansprüche 1 bis 3, dadurch gekennzeichnet, dass der Ansatz (16) lösbar am Anschlusselement (11) angeordnet ist.

6. Befestigungselement nach Anspruch 5, dadurch gekennzeichnet, dass der Ansatz (16) ein mit einem Innengewinde (20a) des Anschlusselementes (11) zusammenwirkendes Aussengewinde (20) aufweist.

7. Befestigungselement nach einem der Ansprüche 1 bis 6, dadurch gekennzeichnet, dass das Anschlusselement (1, 11, 21, 31) ein Angriffsmittel (2, 12, 32) aufweist, das von einem Anschlussgewinde gebildet ist.

8. Befestigungselement nach Anspruch 7, dadurch gekennzeichnet, dass das Anschlussgewinde aus wenigstens zwei Innengewinden mit unterschiedlichen Durchmessern gebildet ist.

## Claims

1. Fixing element with flexural metal part (1a, 11a, 21a, 31a) and a connecting element (1, 11, 21, 31) which serves to place the fixing element on an assembly component, and the flexural metal part (1a, 11a, 21a, 31a) comprises a throughbore (3, 13, 23, 33) for the connecting element (1, 11, 21, 31), and the connecting element (1, 11, 21, 31) comprises a first seating surface (4, 14, 24, 34) which supports itself on the flexural metal part (1a, 11a, 21a, 31a) as well as an extension (6, 16, 26, 36) which passes through the throughbore (3, 13, 23, 33) with a second seating surface (5, 15, 25, 35) positioned opposite the first seating surface (4, 14, 24, 34), and the throughbore (3, 13, 23, 33) is surrounded by a peripheral collar (7, 17, 27, 37), which is formed by the flexural metal part (1a, 11a, 21a, 31a) and protrudes the plane of the flexural metal part (1a, 22a, 21a, 31a) on one side, and one of the seating surfaces (4, 5, 14, 15, 24, 25, 34, 35) comprises an annular recess (8, 18, 28, 38) which accommodates the collar (7, 17, 27, 37), and the depth (T) of the annular recess (8, 18, 28, 38) corresponds at least with the height (H) of the collar (7, 17, 27, 37), **characterised in that** the side of the flexural metal part (1a, 11a, 21a, 31a) positioned opposite the collar (7, 17, 27, 37) co-operates with the second seating surface (4, 14, 24, 34) of the rivet head (9, 39) which is a part of the extension (6, 16, 26, 36) and the outside diameter of which is larger than the diameter of the throughbore (3, 13, 23, 33) of the flexural metal part (1a, 11a, 21a, 31a).

2. Fixing element according to Claim 1, **characterised in that** the annular recess (8, 18, 28) which accommodates the collar (7, 17, 27) is configured on the first seating surface (4, 14, 24).

3. Fixing element according to Claim 1, **characterised in that** the annular recess (28, 38) which accommodates the collar (27, 37) is configured on the second seating surface (24, 34) of the extension (26, 36).

4. Fixing element according to one of Claims 1 to 3, **characterised in that** the extension (6, 26, 36) is integrated into the connecting element (1, 21, 31).

5. Fixing element according to one of Claims 1 to 3, **characterised in that** the extension (16) is detachably configured on the connecting element (11).

6. Fixing element according to Claim 5, **characterised in that** the extension (16) comprises an outside thread (20) which co-operates with an inside thread (20a) of the connecting element (11).

7. Fixing element according to one of Claims 1 to 6, **characterised in that** the connecting element (1, 11, 21, 31) comprises an engaging means (2, 12, 32) which is formed by a connecting thread.

8. Fixing element according to Claim 7, **characterised in that** the connecting thread is composed of at least two inside threads of different diameters.

## Revendications

1. Élément de fixation avec pièce en tôle pliée (1a, 11a, 21a, 31a) et avec un élément de liaison (1, 11, 21, 31) servant à immobiliser l'élément de fixation sur un élément structurel, la pièce en tôle pliée (1a, 11a, 21a, 31a) étant pourvue d'un trou débouchant (3, 13, 23, 33) pour l'élément de liaison (1, 11, 21, 31), et l'élément de liaison (1, 11, 21, 31) comportant une première surface d'appui (4, 14, 24, 34) en contact avec la pièce en tôle pliée (1a, 11a, 21a, 31a) ainsi qu'un prolongement (6, 16, 26, 36) qui traverse le trou débouchant (3, 13, 23, 33) et qui comporte une seconde surface d'appui (5, 15, 25, 35) située à l'opposé de la première surface d'appui (4, 14, 24, 34), le trou débouchant (3, 13, 23, 33) étant entouré par un collet périphérique (7, 17, 27, 37) qui est formé par la pièce en tôle pliée (1a, 11a, 21a, 31a) et qui dépasse du plan de la pièce en tôle pliée (1a, 22a, 21a, 31a) sur un côté, l'une des surfaces d'appui (4, 5, 14, 15, 24, 25, 34, 35) étant pourvue d'un renfoncement annulaire (8, 18, 28, 38) recevant le collet (7, 17, 27, 37), la profondeur (T) du renfoncement annulaire (8, 18, 28, 38) correspondant au moins à la hauteur (H) du collet (7, 17, 27, 37), caractérisé en ce que le côté de la pièce en tôle pliée (la, 11a, 21a, 31a) situé à l'opposé du collet (7, 17, 27, 37) coopère avec la seconde surface d'appui (4, 14, 24, 34) de la tête de rivet (9, 39) qui fait partie du prolongement (6, 16, 26, 36) et dont le diamètre extérieur est supérieur au diamètre du trou débouchant (3, 13, 23, 33) de la pièce en tôle pliée (1a, 11a, 21a, 31a).

2. Élément de fixation selon la revendication 1, caractérisé en ce que le renfoncement annulaire (8, 18, 28) recevant le collet (7, 17, 27) est réalisé dans la première surface d'appui (4, 14, 24).

3. Élément de fixation selon la revendication 1, caractérisé en ce que le renfoncement annulaire (28, 38) recevant le collet (27, 37) est réalisé dans la seconde surface d'appui (24, 34) du prolongement (26, 36).

4. Élément de fixation selon l'une des revendications 1 à 3, caractérisé en ce que le prolongement (6, 26, 36) est réalisé d'un seul tenant avec l'élément de liaison (1, 21, 31).

5. Élément de fixation selon l'une des revendications 1 à 3, caractérisé en ce que le prolongement (16) est monté de manière amovible sur l'élément de liaison (11).

6. Élément de fixation selon la revendication 5, caractérisé en ce que le prolongement (16) comporte un filetage extérieur (20) coopérant avec un taraudage (20a) de l'élément de liaison (11).

7. Élément de fixation selon l'une des revendications 1 à 6, caractérisé en ce que l'élément de liaison (1, 11, 21, 31) comporte un moyen d'attaque (2, 12, 32) qui est formé par un filetage de raccordement.

8. Élément de fixation selon la revendication 7, caractérisé en ce quc le filetage de raccordement est formé par au moins deux taraudages de diamètres différents.
